Europäisches Patentamt

European Patent Office

Office européen des brevets

(19)

(11) Veröffentlichungsnummer: **0 212 174**
B1

(12) # EUROPÄISCHE PATENTSCHRIFT

(45) Veröffentlichungstag der Patentschrift:
04.04.90

(51) Int. Cl.⁴: **A01D 17/00**, A01D 33/08

(21) Anmeldenummer: 86109088.4

(22) Anmeldetag: 03.07.86

(54) **Kartoffelerntemaschine.**

(30) Priorität: 16.08.85 DE 3529464

(43) Veröffentlichungstag der Anmeldung:
04.03.87 Patentblatt 87/10

(45) Bekanntmachung des Hinweises auf die Patenterteilung:
04.04.90 Patentblatt 90/14

(84) Benannte Vertragsstaaten:
AT BE CH DE FR GB IT LI NL SE

(56) Entgegenhaltungen:
DE-A- 1 757 617
DE-A- 1 953 084
DE-B- 1 072 422
US-A- 4 382 471

(73) Patentinhaber: Franz Grimme Landmaschinenfabrik
GmbH & Co. KG., Wiesenstrasse 10,
D-2845 Damme 1(DE)

(72) Erfinder: Welp, Johannes, Osterdammer Strasse 9,
D-2845 Damme/Dümmer(DE)

(74) Vertreter: Busse & Busse Patentanwälte,
Postfach 1226 Grosshandelsring 6,
D-4500 Osnabrück(DE)

ACTORUM AG

## Beschreibung

Die Erfindung bezieht sich auf eine Kartoffelerntemaschine gemäß dem Oberbegriff des Anspruchs 1.

Bei bekannten Kartoffelerntemaschinen dieser Art bilden Höhenförderer und Krauttrennvorrichtung gesonderte Aggregate, die in verschiedenen Ausführungen bekannt sind. Als Höhenförderer finden Ringförderer, Förderräder oder Seitenelevatoren Verwendung. Eine erste bekannte Krauttrennvorrichtung (DE-C 2 312 111) sieht eine Krautzupfwalze vor, die in Zusammenwirken mit dem oberen Ende des Siebförderbandes das Kraut zwischen sich und dem Bandende abfördert, während sie von Kartoffeln und gegebenenfalls mitgeförderten Steinen überlaufen wird. Diese werden dann durch einen Höhenförderer einer Steintrennvorrichtung zugeführt. Eine zweite bekannte Krauttrennvorrichtung (Prospekt Niewöhner "Wühlmaus 2165") sieht einen feinmaschigen, von einem Stabförderband gebildeten Krautelevator vor, der dem oberen Ende des Siebförderbandes nachgeordnet ist und vom Siebförderband herangefördertes Kartoffelkraut weiterbefördert, während Kartoffeln und gegebenenfalls mitgeförderte Steine zwischen dem oberen Ende des Siebförderbandes und dem unteren Ende des Krautelevators hindurch nach unten auf einen Höhenförderer – oder einen diesem vorgeordneten Zwischenförderer – herabfallen, der die Kartoffeln und die Steine einer Steintrennvorrichtung zuführt. Eine dritte bekannte Krauttrennvorrichtung (Prospekt Grimme "Kartoffel-Vollernter 1968) besteht aus einem der Siebband nachgeordneten Doppelförderer, der ein innen umlaufendes, engmaschiges Stabförderband als Kartoffelförderer und ein in gleicher Richtung außen umlaufendes, zumindest im Bereich des Fördertrums des Doppelförderers parallelgeführtes, weitmaschiges Stabförderband als Krautförderer aufweist. Der Doppelförderer ist als in Förderrichtung leicht ansteigender Schrägförderer ausgebildet, und dem Ende des Kartoffelförderers ist direkt oder über einen Zwischenförderer der Höhenförderer nachgeordnet, der vom Kraut getrennt Kartoffeln und gegebenenfalls mitgeförderte Steine der Steintrennvorrichtung zuführt.

Schließlich ist eine Kartoffelerntemaschine (DE-B 1 072 422) mit einem eine Krauttrennvorrichtung bildenden Schrägförderer bekannt, dessen im Abstand parallel nebeneinander angeordneten Förderketten durch Mitnehmer verbunden sind, die das Erntegut auf einem rostartigen Förderboden nach hinten fördern. Diesem ist als Feintrennvorrichtung für Kraut ein weiterer Kettenförderer nachgeordnet und beide Förderer sind von einem Förderrad als Höhenförderer umlaufen.

Der Erfindung liegt die Aufgabe zugrunde, eine Kartoffelerntemaschine zu schaffen, die baulich besonders einfach und dabei kompakt ausgebildet ist.

Die Erfindung löst diese Aufgabe ausgehend von einer Kartoffelerntemaschine nach dem Oberbegriff des Anspruchs 1 durch die im kennzeichnenden Teil des Anspruchs 1 angegebenen Merkmale.

Hinsichtlich wesentlicher weiterer Ausgestaltungen wird auf die Ansprüche 2 bis 10 verwiesen.

Bei der Kartoffelerntemaschine nach der Erfindung übernimmt die Krauttrennvorrichtung zugleich die Aufgabe des Höhenförderers mit der Folge einer erheblichen Verminderung des Bauaufwandes und des Bauvolumens der Maschine.

Weitere Einzelheiten und Vorteile ergeben sich aus der nachfolgenden Beschreibung, in der in Verbindung mit der Zeichnung zwei Ausführungsbeispiele des Gegenstands der Erfindung näher erläutert werden. In der Zeichnung zeigen:

Fig. 1 eine perspektivische, vereinfachte Gesamtansicht einer ersten Ausführung einer Kartoffelerntemaschine nach der Erfindung,

Fig. 2 eine abgebrochene Einzelheit des den Höhenförderer bildenden Doppelförderers, und

Fig. 3 eine vereinfachte Darstellung einer Kartoffelerntemaschine mit quer zur Fahrtrichtung ausgerichteter Umlaufebene des Doppelförderers.

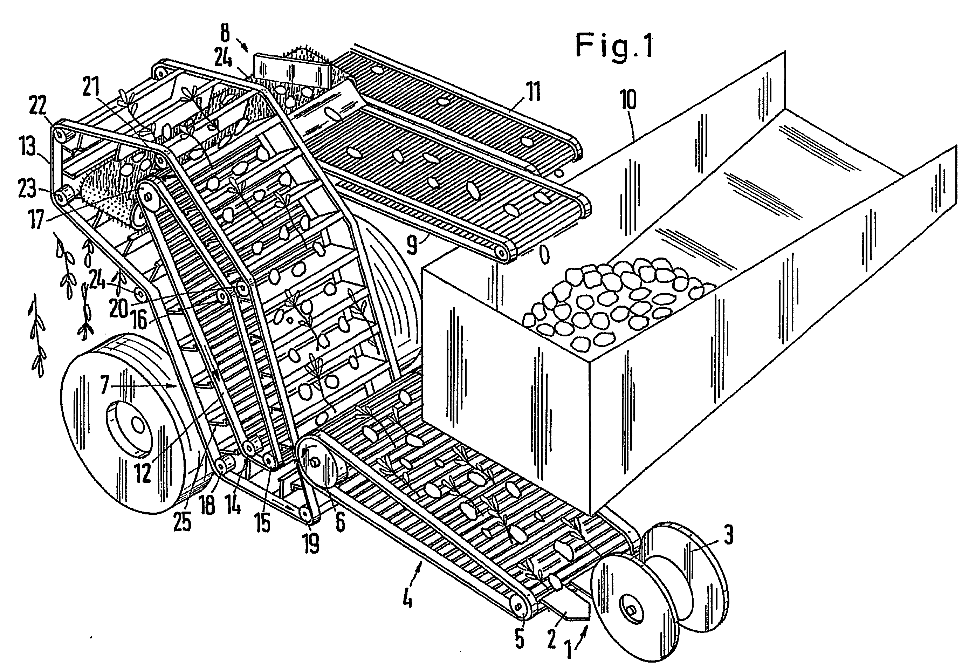

Die in Fig. 1 veranschaulichte Kartoffelerntemaschine umfaßt eine Rodevorrichtung 1, die von Rodescharen 2 und einer diesen vorauslaufenden Dammtrommel 3 gebildet ist, ein sich an die Rodevorrichtung 1 anschließendes Siebförderband 4, das als Stabförderband ausgebildet ist und um Umlenkrollen 5 bzw. Umlenk- und Antriebsrollen 6 endlos angetrieben umläuft, einen dem oberen bzw. rückwärtigen Ende des Siebförderbandes 4 unmittelbar nachgeordneten Höhenförderer 7, der zugleich eine Krauttrennvorrichtung bildet, sowie eine Steintrennvorrichtung 8, welche die von Steinen getrennten Kartoffeln an ein Förderband 9 zu einem Vorratsbehälter 10 übergibt und Steine entweder unmittelbar auf den Boden abwirft oder an einen Förderer 11 abgibt, der die Steine zu einem nicht dargestellten Sammelbehälter befördert.

Die Maschine kann als Anhängemaschine an einen landwirtschaftlichen Schlepper od.dgl. Zugfahrzeug angehängt werden oder auch als Selbstfahrer ausgebildet sein. Anstelle der dargestellten einreihigen kann auch eine zweireihige Ausführung vorgesehen sein. Für die einzelnen Aggregate der Maschine sind, soweit vonnöten, Antriebe vorgesehen, die von einzelnen Antriebsmotoren, z.B. Hydraulikmotoren, oder von Transmissionen gebildet sind, die vom Zugfahrzeug her in Betrieb gesetzt werden.

Der Höhenförderer 7 ist von einem Doppelförderer gebildet, der ein innen umlaufendes, engmaschiges Stabförderband 12 als Kartoffelförderer und ein in gleiche Richtung außen umlaufendes, zumindest im Bereich des Fördertrums des Höhenförderers 7 parallelgeführtes, weitmaschiges Stabförderband 13 als Krautförderer umfaßt. Das Stabförderband 12 läuft um Umlenkrollen 14, 15, 16 sowie Umlenk- und Antriebsrollen 17 um, und das Stabförderband 13 umläuft Umlenkrollen 18, 19, 20, 21, 22, 23 und 24, von denen z.B. die Umlenkrollen 22 zugleich auch Antriebsrollen bilden können. Das Fördertrum des Stabförderbandes 13 erstreckt sich zwischen den Umlenkrollen 19 und 22, und das Umlenktrum des Stabförderbandes 12 zwischen den Umlenkrollen 15 bis 17. Im Bereich zwischen den Förderrollen 15 und 17 sind die Stabförderbänder 12, 13 zueinander parallel geführt. Die Steintrennvorrichtung 8 ist mit einem querlaufenden Fingerband 24 dem oberen Ende des Stabförderbandes 12 unmittelbar nachgeordnet und nimmt vom Fördertrum des Höhenförderers 7 hochgeförderte Kartoffeln und Steine zur Durchführung eines Steintrennvorganges auf. Das Fingerband 24 befindet sich dabei in einer Umführung des oberen Bereiches des Stabförderbandes 13 und steht mit seinem Abgabeende aus dem Umführungsbereich vor.

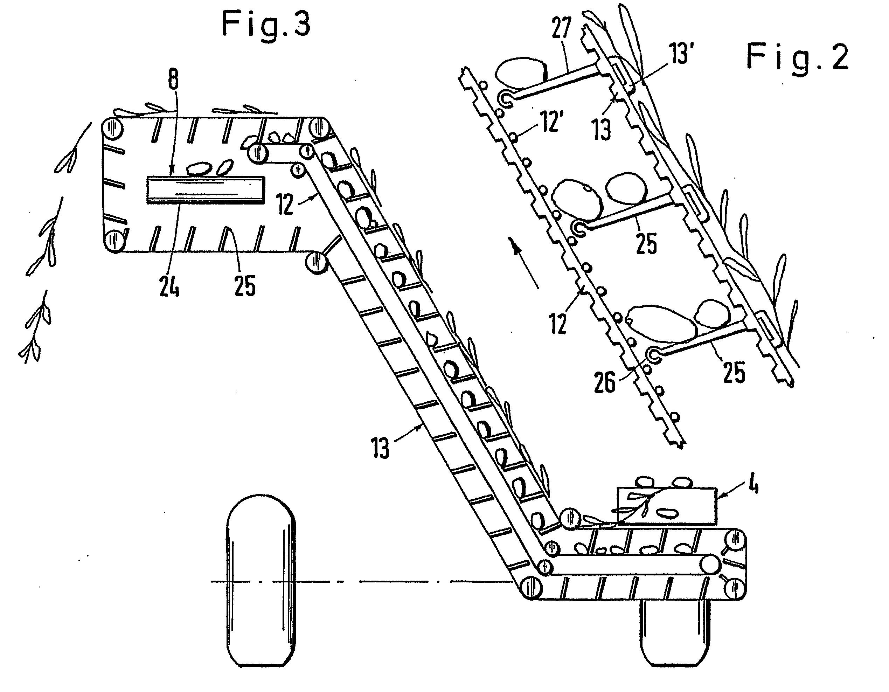

Eines der Stabförderbänder 12 oder 13, bevorzugtermaßen das den Krautförderer bildende Stabförderband 13, ist auf seiner dem anderen Stabförderband zugewandten Seite mit quergerichteten Mitnehmerstegen 25 besetzt, die den Zwischenraum zwischen den Fördertrums der beiden Stabförderbänder 12, 13 in becherförmige Abteile unterteilen. Die Mitnehmerstege 25 sind dabei von Gummiplatten gebildet, die an ihrer freien Randkante in einer ösenförmig eingerollten, elastischen Lippe 26 auslaufen. Die Förderfläche 27 der Mitnehmerstege 25 schließt mit der von den Stäben 12′ definierten Förderfläche des Stabförderbandes 12 in dessen Fördertrumbereich einen 90° geringfügig überschreitenden Winkel ein, durch den der Schrägabfall dieser Förderfläche 27 zum Stabförderband 12 hin auf einen Neigungswinkel eingestellt wird, der den in den Becherabteilen enthaltenen Kartoffeln eine Bewegungstendenz zur Förderfläche des Stabförderbandes 12 hin vermittelt. Dadurch ist ein Herausfallen von Kartoffeln aus den Abteilen vermieden, und bei einer erfindungsgemäß möglichen, fest eingestellten oder in Stufen oder stufenlos einstellbaren Differenz in den Umlaufgeschwindigkeiten zwischen den Stabförderbändern 12 und 13 können Roll- und damit Absiebungs- bzw. Säuberungseffekte erreicht werden, wie sie je nach Bodenverhältnissen erwünscht sind. Bevorzugt ist eine etwas höhere Umlaufgeschwindigkeit für das Stabförderband 12, bei der den Kartoffeln in den Abteilen eine in Fig. 3 im Uhrzeigersinn verlaufende leichte Rollbewegung erteilt wird, die bei leichten Böden zum Säubern ausreichend sein kann. Bei schweren Böden kann auch eine etwas höhere Umlaufgeschwindigkeit des Stabförderbandes 13 vorgesehen werden, um einen verstärkten, in Fig. 2 im Gegenuhrzeigersinn ablaufenden Rollvorgang mit aggressiverer Säuberungswirkung zu erhalten. Im Falle von sandigen Böden reicht gegebenenfalls die Absiebwirkung durch das Siebförderband 4 aus, so daß beide Stabförderbänder 12, 13 auch gleiche Umlaufgeschwindigkeiten aufweisen können. Das Verhältnis der Umlaufgeschwindigkeit der Stabförderbänder 12, 13 zueinander soll ein Wert annehmen, der im Bereich zwischen 0,8 und 1,2 liegt.

Während die Stäbe 12′ des Stabförderbandes 12 einen gegenseitigen Abstand in der Größenordnung von etwa 35 bis 44 mm aufweisen und damit engmaschig gestellt sind, haben die Stäbe 13′ des Stabförderbandes 13 einen gegenseitigen Abstand, der im Bereich von 120 bis 240 mm liegen kann und bevorzugt etwa 160 mm beträgt. Die Mitnehmerstege 25 haben bevorzugt einen gegenseitigen Abstand, der dem Abstand der Stäbe 13′ des Stabförderbandes 13 entspricht.

Bei der Ausführung nach Fig. 1 verläuft die Umlaufebene des Höhenförderers parallel zur Fahrtrichtung der Maschine, jedoch ist es auch möglich, diese Umlaufebene quer zur Fahrtrichtung auszurichten, wie dies die schematische Darstellung in Fig. 3 verdeutlicht. Eine solche Ausführung ermöglicht beispielsweise einen reihenweisen Abwurf des Kartoffelkrautes bzw. einen Abwurf unmittelbar in einen parallel mitfahrenden Sammelbehälter.

Bei einer im Interesse der Gewinnung von Höhe steilen Anstellung des Höhenförderers 7 wirken die Stabförderbänder 12, 13 bei der Förderung von Kartoffeln und Steinen zusammen, wenn wie bevorzugt, die Mitnehmerstege 25 am Stabförderband 13 befestigt sind, das allein an der Krautförderung beteiligt ist. Die Hauptförderarbeit wird von den Mitnehmerstegen 25 erbracht, denen das Stabförderband 12 im wesentlichen nur als Begrenzung unter Bildung der Becherabteilung zugeordnet ist.

## Patentansprüche

1. Kartoffelerntemaschine mit einem sich an eine Rodevorrichtung (1) anschließenden Siebförderband (4), einer dem Siebförderband (4) nachgeordneten Krauttrennvorrichtung, die von einem an sich bekannten Doppelförderer mit einem innen umlaufenden, engmaschigen Stabförderband (12) und einem in gleicher Richtung außen umlaufenden, zumindest im Bereich des Fördertrums des Höhenförderers (7) parallelgeführten, weitmaschigen Stabförderband (13) gebildet ist, einem Höhenförderer (7) und einer Steintrennvorrichtung (8), dadurch gekennzeichnet, daß der die Krauttrennvorrichtung bildende Doppelförderer als Höhenförderer (7) ausgebildet ist und daß ein Stabförderband mit quergerichteten Mitnehmerstegen (25) besetzt ist, die den Zwischenraum zwischen den Fördertrums der beiden Förderer (12, 13) in Abteile unterteilen.

2. Maschine nach Anspruch 1, dadurch gekennzeichnet, daß die Mitnehmerstege (25) von Gummiplatten gebildet sind.

3. Maschine nach Anspruch 2, dadurch gekennzeichnet, daß die Mitnehmerstege (25) an ihrer freien Randkante in einer ösenförmig eingerollten, elastischen Lippe (26) auslaufen.

4. Maschine nach einem der Ansprüche 1 bis 3, dadurch gekennzeichnet, daß die Förderfläche (27) der Mitnehmerstege (25) mit der Förderfläche des inneren Stabförderbandes (12) im Fördertrumbereich des Höhenförderers (7) einen 90° etwas überschreitenden Winkel einschließt und zur Förderfläche des Stabförderbandes (12) hin leicht abfällt.

5. Maschine nach einem oder mehreren der Ansprüche 1 bis 4, dadurch gekennzeichnet, daß die Mitnehmerstege (25) am inneren Stabförderband (12) angebracht sind.

6. Maschine nach Anspruch 5, dadurch gekennzeichnet, daß die Mitnehmerstege (25) in einem Abstand aufeinanderfolgen, der dem Abstand der Stäbe (13′) des äußeren Stabförderbandes (13) entspricht.

7. Maschine nach einem oder mehreren der Ansprüche 1 bis 6, dadurch gekennzeichnet, daß das Verhältnis der Umlaufgeschwindigkeiten der Stabförderbänder (12, 13) zueinander einen Wert im Bereich zwischen 0,8 bis 1,2 aufweist.

8. Maschine nach einem oder mehreren der Ansprüche 1 bis 7, dadurch gekennzeichnet, daß die Umlaufgeschwindigkeit des inneren und/oder des äußeren Stabförderbandes (12, 13) insbesondere stufenlos veränderbar ist.

9. Maschine nach einem oder mehreren der Ansprüche 1 bis 8, dadurch gekennzeichnet, daß die Steintrennvorrichtung (8) in einer Umführung im oberen Bereich des äußeren Stabförderbandes (13) dem Ende des Fördertrums des inneren Stabförderbandes (12) unmittelbar nachgeordnet ist.

10. Maschine nach einem oder mehreren der Ansprüche 1 bis 9, dadurch gekennzeichnet, daß die Umlaufrichtung des Höhenförderers (7) parallel oder quer zur Fahrtrichtung ausgerichtet ist.

## Claims

1. A potato harvester having a screening conveyor belt (4) following on a lifting device (1), a haulm separating device which is disposed behind the screening conveyor belt (4) and is formed by a double conveyor, known per se, with a narrow-mesh bar-type conveyor belt (12) circulating on the inside and a wide-mesh bar-type conveyor belt (13) circulating in the same direction at the outside and guided parallel thereto at least in the region of the conveying strand of the elevator (7), an elevator (7) and a stone separating device (8), characterised in that the double conveyor forming the haulm separating device is constructed in the form of an elevator (7), and in that a bar-type conveyor belt is occupied by transversely directed entrainment webs (25) which divide the gap between the conveying strands of the two conveyors (12, 13) into compartments.

2. A machine according to claim 1, characterised in that the entrainment webs (25) are formed from rubber flights.

3. A machine according to claim 2, characterised in that the entrainment webs (25) end, at their free marginal edge, in a resilient lip (26) rolled round in the form of an eye.

4. A machine according to any one of claims 1 to 3, characterised in that the conveying surface (27) of the entrainment webs (35) forms an angle somewhat exceeding 90° with the conveying surface of the inner bar-type conveyor belt (12) and slopes gently down towards the conveying surface of the bar-type conveyor belt (12).

5. A machine according to any one or more of claims 1 to 4, characterised in that the entrainment webs (25) are provided on the inner bar-type conveyor belt (12).

6. A machine according to claim 5, characterised in that the entrainment webs (25) follow one another with a spacing which corresponds to the spacing of the bars (13′) of the outer bar-type conveyor belt (13).

7. A machine according to any one or more of claims 1 to 6, characterised in that the ratio of the circulation speeds of the bar-type conveyor belts (12, 13) to one another has a value in the range between 0.8 and 1.2.

8. A machine according to any one or more of claims 1 to 7, characterised in that the speed of circulation of the inner and/or of the outer bar-type conveyor belt (12, 13) is variable, particularly infinitely variable.

9. A machine according to any one or more of claims 1 to 8, characterised in that the stone separating device (8) is disposed immediately after the end of the conveying strand of the inner bar-type conveyor belt (12), in a loop in the upper region of the outer bar-type conveyor belt (13).

10. A machine according to any one or more of claims 1 to 9, characterised in that the direction of circulation of the elevator (7) is aligned parallel or transversely to the direction of travel.

## Revendications

1. Machine pour la récolte de pommes de terre comportant un crible convoyeur (4) contigu à un dispositif arracheur (1), un dispositif séparateur de fanes qui suit le crible convoyeur (4) et qui est formé par un transporteur double bien connu comprenant une bande transporteuse à claire-voie à interstices étroits qui tourne à l'intérieur et une bande transporteuse à claire-voie à interstices larges qui tourne à l'extérieur dans le même sens et qui est guidée parallèlement au moins dans la zone du brin de transport de l'élévateur (7), un élévateur (7) et un dispositif de séparation de cailloux (8), caractérisée en ce que le transporteur double formant le dispositif de séparation de fanes a la forme d'un élévateur (7) et une bande transporteuse à claire-voie est garnie d'entretoises entraîneuses transversales (25) qui divisent l'intervalle entre les brins de transport des deux transporteurs (12, 13) en compartiments.

2. Machine suivant la revendication 1, caractérisée en ce que les entretoises entraîneuses (25) sont formées par des plaques en caoutchouc.

3. Machine suivant la revendication 2, caractérisée en ce que les entretoises entraîneuses (25) se terminent à leur bord libre dans une lèvre élastique (26) roulée en forme de crochet.

4. Machine suivant l'une quelconque des revendications 1 à 3, caractérisée en ce que la surface de transport (27) de l'entretoise entraîneuse (25) forme, avec la surface de transport de la bande transporteuse à claire-voie intérieure (12), dans la zone du brin de transport de l'élévateur (7), un angle légèrement supérieur à 90° et est légèrement en pente en direction de la surface de transport de la bande transporteuse à claire-voie (12).

5. Machine suivant l'une quelconque des revendications 1 à 4, caractérisée en ce que les entretoises entraîneuses (25) sont montées sur la bande transporteuse à claire-voie intérieure (12).

6. Machine suivant la revendication 5, caractérisée en ce que les entretoises entraîneuses (25) se suivent à une distance qui correspond à l'écartement des barres (13′) de la bande transporteuse à claire-voie extérieure (13).

7. Machine suivant l'une quelconque des revendications 1 à 6, caractérisée en ce que le rapport des vitesses de rotation des bandes transporteuses à claire-voie (12, 13) présente une valeur comprise entre 0,8 et 1,2.

8. Machine suivant l'une quelconque des revendications 1 à 7, caractérisée en ce que la vitesse de rotation de la bande transporteuse à claire-voie intérieure et/ou celle de la bande transporteuse à claire-voie extérieure (12, 13) peuvent être modifiées en substance sans à-coups.

9. Machine suivant l'une quelconque des revendications 1 à 8, caractérisée en ce que le dispositif de séparation des cailloux (8) est disposé immédiatement après l'extrémité du brin de transport de la bande transporteuse à claire-voie intérieure (12), dans une section de retour située dans la zone supérieure de la bande transporteuse à claire-voie extérieure (13).

10. Machine suivant l'une quelconque des revendications 1 à 9, caractérisée en ce que le sens de rotation de l'élévateur (7) est parallèle ou perpendiculaire à la direction de déplacement.

Fig.1

EP 0 212 174 B1

Fig.2

Fig.3